# EUROPÄISCHE PATENTSCHRIFT

(11) **EP 3 105 166 B1**
(45) Veröffentlichungstag und Bekanntmachung des Hinweises auf die Patenterteilung: **03.04.2019**
(21) Anmeldenummer: 15704773.9
(22) Anmeldetag: 09.02.2015
(51) Int. Cl.: B66D 3/22, H02K 7/116, B66D 1/58, H02K 49/06, H02K 7/11

(54) **HEBEZEUG MIT HYSTERESEKUPPLUNG**
LIFTING GEAR COMPRISING A HYSTERESIS CLUTCH
ENGIN DE LEVAGE AVEC ACCOUPLEMENT À HYSTÉRÉSIS

(30) Priorität: 11.02.2014 DE 102014101655
(43) Veröffentlichungstag der Anmeldung: 21.12.2016
(73) Patentinhaber: Konecranes Global Corporation, 05830 Hyvinkää (FI)
(72) Erfinder: GOLDER, Markus, 74653 Künzelsau (DE)
(74) Vertreter: Rüger Abel
(86) Internationale Anmeldenummer: PCT/EP2015/052652
(87) Internationale Veröffentlichungsnummer: WO 2015/121203

(56) Entgegenhaltungen:
- DE-A1- 10 005 411
- GB-A- 2 115 367
- US-A- 3 573 518

## Beschreibung

Die Erfindung betrifft ein Hebezeug, dessen Antriebstrang eine reibungsfreie Schlupfkupplungsanordnung aufweist.

Bei Hebezeugen werden üblicherweise im Antriebstrang Schlupfkupplungen vorgesehen, um eine Überlastung des Zugmittels des Getriebes oder sonstiger Komponenten des Hebezeugs oder von Tragstrukturen zu vermeiden, an denen das Hebezeug gehalten ist. Auch bei fehlerhaften Betriebszuständen, wie beispielsweise dem Hängenbleiben einer Last an einem Hindernis beim Aufwärtsfahren der Last, dürfen weder Schädigungen des Kettenzugs noch sonstige Gefahren auftreten. Dies gilt auch, wenn das Hebezeug in Horizontalbetrieb, beispielsweise zum Antrieb eines Fahrwerks oder eines Schlittens, genutzt wird.

Aus der US 3,573, 518 ist ein Hebezeug bekannt, dessen Antriebsstrang auf einen Motor und ein Getriebe und eine dazwischen angeordnete Schlupfkupplungsanordnung aufweist. Getriebeseitig ist eine Bremse vorgesehen, die als sogenannte Lastdruckbremse ausgebildet ist. Die Last übt über ein Zugmittel und dessen Wickelrad ein Drehmoment auf eine Getriebeabtriebswelle aus. Dieses Drehmoment wird dazu genutzt, Bremsbacken der Bremse in Schließrichtung zu drängen, so dass die Last bei stromlosem Motor sicher gehalten bleibt.

Die Schlupfkupplungsanordnung besteht aus einer Parallelanordnung einer Hysteresekupplung und einer Freilaufkupplung. Beim Aufwärtsfahren der Last ist die Bremse gelüftet und die Freilaufkupplung ist inaktiv. Das von der Hysteresekupplung übertragbare Drehmoment ist größer als das Nennlastmoment, so dass die Last schlupffrei nach oben befördert wird.

Beim Herablassen einer Last greift die Freilaufkupplung ein. Sie führt zu einer drehstarren Verbindung zwischen Motor und Getriebeeingangswelle. Mittels Motorkraft wird nun das Haltemoment der Lastdruckbremse überwunden und die Last nach unten befördert.

Die Hysteresekupplung dient als Überlastsicherung. Tritt an ihr dauernder Schlupf auf, wird ein Thermoschalter ausgelöst, um den Antrieb still zu setzen.

Neben dem Hängenbleiben von Lasten können an Hebezeugen andere nachteilige Betriebszustände auftreten, die es zu vermeiden oder deren Auswirkungen es zu mildern gilt. Beispielsweise kann durch Resonanzanregung durch den Polygoneffekt des Kettenrads eine Kettenschwingung auftreten, die Tragstrukturen, Gebäudeteile oder auch das Getriebe des Kettenzugs überlasten oder verschleißen kann. Dem Auftreten solcher Schwingungen ist entgegenzuwirken.

Weiter treten beim Ein- und Ausschalten sowie beim Drehzahlumschalten polumschaltbarer netzgeführter Motoren an den Motoren Drehzahlsprünge auf, die zu einer stoßartigen Belastung von Zugmittel und Getriebe führen können. Dies gilt es zu vermeiden.

Insbesondere bei stromrichtergeführten Antrieben stellen sich bei der Ausbildung der Stromrichter hohe Sicherheitsanforderungen. Es muss jedenfalls vermieden werden, dass es bei einem gestörten Stromrichter oder seiner gestörten Steuerung zum unkontrollierten Bewegen einer Last kommt. Hier sind Maßnahmen wünschenswert, die mit hoher Sicherheit und geringem Aufwand Gefahren für Mensch, Maschine und Umwelt mindern oder ausschließen können.

Es ist Aufgabe der Erfindung, ein Hebezeug dahingehend zu verbessern, dass es einem oder mehreren der oben genannten Probleme abhilft.

Diese Aufgabe wird mit einem Hebezeug nach Anspruch 1 gelöst:
Das erfindungsgemäße Hebezeug weist einen Antriebstrang mit einer Schlupfkupplungsanordnung auf, die einen unverzweigten Drehmomentübertragungsweg bildet, der durch eine Hysteresekupplung gebildet ist. Es existiert kein Bypassweg, auf dem an der Hysteresekupplung vorbei Drehmoment übertragen werden könnte. Die Hysteresekupplung ist somit sowohl bei Vorwärtsdrehung (Heben der Last) wie bei Rückwärtsdrehung (Senken der Last) wirksam. Sie ist frei von mechanischer Reibung. Läuft sie im Ölbad kann zusätzlich zu dem durch Hysterese hervorgerufenen Moment ein fluiddynamisch übertragenes Drehmoment auftreten. Außerdem kann durch Wirbelströme in der Hysteresekupplung ein Drehmoment übertragen werden. Jedoch ist zu der Hysteresekupplung parallel kein weiteres Kupplungsbauelement vorgesehen oder wirksam.

Durch die oben genannte Maßnahme lassen sich erhebliche Vorteile erzielen:
Gerät die an dem Zugmittel hängende Last in Schwingung, treten in dem Antriebstrang Drehmomentschwingungen auf. Die Hysteresekupplung gerät durch diese Schwingungen in Schlupfbetrieb, sobald ein Grenzmoment überschritten ist. Das Grenzmoment ist dabei dasjenige Drehmoment, bei dem die Hysteresekupplung von schlupffreiem Betrieb in schlupfbehafteten Betrieb übergeht. Der Schlupf ist Eins minus dem Quotienten aus der Ausgangsdrehzahl und der Eingangsdrehzahl der Kupplung. Das Grenzdrehmoment kann oberhalb des Nennlastmoments oder auch unterhalb desselben festgelegt sein. In letzterem Fall ist die Schwingungstilgung besonders effizient. Jedoch tritt auch im erstgenannten Fall Schwingungstilgung auf, so dass eine Überlastung des Hebezeugs und von Tragstrukturen vermieden werden kann.

Die Hysteresekupplung kann außerdem Laststöße dämpfen, die durch das Hängenbleiben einer Last, durch den sprungartigen Motoranlauf oder durch sprungartige Motordrehzahländerungen verursacht sein können. Dies ist besonders wirksam, wenn das Grenzdrehmoment niedriger als das Nenndrehmoment festgelegt ist. Jedoch tritt die Dämpfungswirkung auch bei anderweitiger Festlegung auf.

Das erfindungsgemäße Konzept ermöglicht außerdem den Aufbau sicherheitsgerichteter Hebezeuge, insbesondere stromrichtergeführte Hebezeuge, mit geringem Aufwand. Ein sicherheitsgerichteter Not-Aus-Taster-Kreis kann zum Schließen der Lastbremse dienen. Die Hysteresekupplung überträgt auch bei Maximaldrehzahl des Motors lediglich ein begrenztes Drehmoment vom Motor auf das Getriebe, so dass es bei einer Störung der Stromrichtersteuerung oder des Stromrichters auf ein Weiterlaufen des Motors nicht ankommt. Egal ob dieser vorwärts oder rückwärts weiterläuft, die Last ist über die getriebeseitig vorgesehen Bremse stillsetzbar.

Sowohl der Schwingungsdämpfung als auch dem Sicherheitsaspekt ist es dienlich, wenn die Schlupfkupplungsanordnung bezüglich der Vorwärtsdrehrichtung und der Rückwärtsdreherichtung eine symmetrische Drehmoment-Schlupf-Kennlinie aufweist.

Vorzugsweise ist die mindestens eine Bremse getriebeseitig angeordnet und elektrisch gelüftet. Die Bremse kann somit sowohl beim Heben von Lasten als auch beim Senken derselben gelüftet sein, was einen effizienten energieverlustarmen Betrieb des Hebezeugs gestattet. Sicherheitsaspekten wird Genüge getan, indem die Bremse elektrisch aktiv gelüftet und durch eine Schließfeder geschlossen wird. Sobald der Stromkreis zum Lüften der Bremse stromlos wird, schließt die Bremse unter Federkraft. Damit erzeugt die Bremse ein definiertes, lastunabhängiges Bremsmoment. Dieses kann so ausgelegt sein, dass das maximale Bremsmoment Mₘₐₓ einer fiktiven Last Fₘₐₓ entspricht, die größer ist als die Nennlast Fₙₒₘ. Wird der Hebezug stromlos, fällt die Bremse automatisch ein (d.h. sie schließt unter Wirkung der Federkraft) und die Last kann nicht unkontrolliert absinken.

Es ist möglich, die Bremse auszulegen, dass ihr maximales Bremsmoment Mₘₐₓ, zumindest so groß ist, wie die Summe aus einem Nennlastmoment Mₙₒₘ und einem Antriebsmoment M_{Antr}. Das Antriebsmoment M_{Antr} ist dasjenige Moment, das von Motor und Schlupfkupplungsanordnung in den Antriebstrang eingespeist werden kann. Die Bremse kann somit sowohl das von der Last aufgebrachte Moment Mₙₒₘ als auch das von dem Antrieb aufgebrachte Antriebsmoment M_{Antr} aufbringen. Unter dieser Bedingung können einfache sicherheitsgerichtete Hebezeuge aufgebaut werden, bei denen lediglich die Bremssteuerung besonderen Sicherheitsanforderungen unterliegt, wobei die Motorsteuerung sowie gegebenenfalls vorhandene Umrichter geringeren Sicherheitsanforderungen genügen. Die Bremse kann die Last auch dann halten, wenn der Motor unkontrolliert in beliebiger Richtung dreht, während die Hysteresekupplung das übertragene Drehmoment auf einen von der Bremse noch sicher aufzunehmenden Wert begrenzt. Sollte ein solcher Fehlerzustand fortbestehen, kann die mechanisch berührungslos arbeitende Hysteresekupplung eine Temperatur erreichen, bei der ein oder mehrere Permanentmagnete schwächer werden oder ganz entmagnetisieren. Damit wird die Drehmomentübertragung abgeschwächt oder unterbrochen. Eine weitere Erwärmung und gefährliche Überhitzung des Antriebs wird dadurch unterbunden. Dies gilt sowohl für Hebezeuge mit stromrichtergeführten Antrieben wie auch für Hebezeuge mit netzgeführten Antrieben.

Bei der getriebeseitigen Anordnung der mindestens einen Bremse ist es, wie schon erwähnt, möglich, dass die Schlupfkupplungsanordnung ein Grenzdrehmoment M_{grenz} aufweist, bei dem sie zu schlüpfen beginnt und das geringer ist, als ein Nennmoment Mₙₒₘ, das bei Nennlast Fₙₒₘ auftritt. Neben den oben genannten Vorteilen lässt sich dabei auch bei Blockierung des Motors eine manuelle Lastabsenkung bewirken, indem der Motor blockiert, die Bremse gelüftet und die Hysteresekupplung z.B. manuell so weit verstellt wird, dass ein kontrolliertes Absenken der Last möglich ist. Die Hysteresekupplung wirkt dabei als Hysteresebremse.

Alternativ oder zusätzlich kann die Bremse auf der Motorseite des Antriebstrangs angeordnet werden. In diesem Fall, ist das Grenzmoment M_{grenz} der Schlupfkupplungsanordnung vorzugsweise so festgelegt, dass es größer ist als das bei Nennlast Fₙₒₘ auftretende Nennmoment Mₙₒₘ.

Alternativ können auch zwei oder mehrere Bremsen auf beiden Seiten der Schlupfkupplungsanordnung, d.h. sowohl motorseitig als auch getriebeseitig vorgesehen sein.

Weitere Einzelheiten vorteilhafter Ausführungsformen der Erfindung ergeben sich aus der nachfolgenden Beschreibung einiger Ausführungsbeispiele sowie aus der Zeichnung und Unteransprüchen. Es zeigen:
Fig. 1 ein Hebezeug, in schematischer Gesamtdarstellung,
Fig. 2 das Hebezeug nach Figur 1, Blockschaltbildhebezeug.
Fig. 3 das Hebezeug nach Figur 1 und zwei, in schematischer Prinzipdarstellung.
Fig. 4 eine Ausführungsform des Hebezeugs nach Figur 1 bis 3, in einer der Praxis genäherten Veranschaulichung.
Fig. 5 die Drehmomentschlupfkennlinie einer ersten Gruppe von Ausführungsformen der Erfindung.
Fig. 6 die Drehmomentschlupfkennlinie einer zweiten Ausführungsform der Erfindung.
Fig. 7 und 8 Zeitdiagramme der Kupplungsdrehzahlen am Kupplungseingang und Ausgang bei verschiedenen Lasten und
Fig. 9 Zeitdiagramme des Drehmoments an der Schlupfkupplung bei Auftreten von Lastschwingungen.

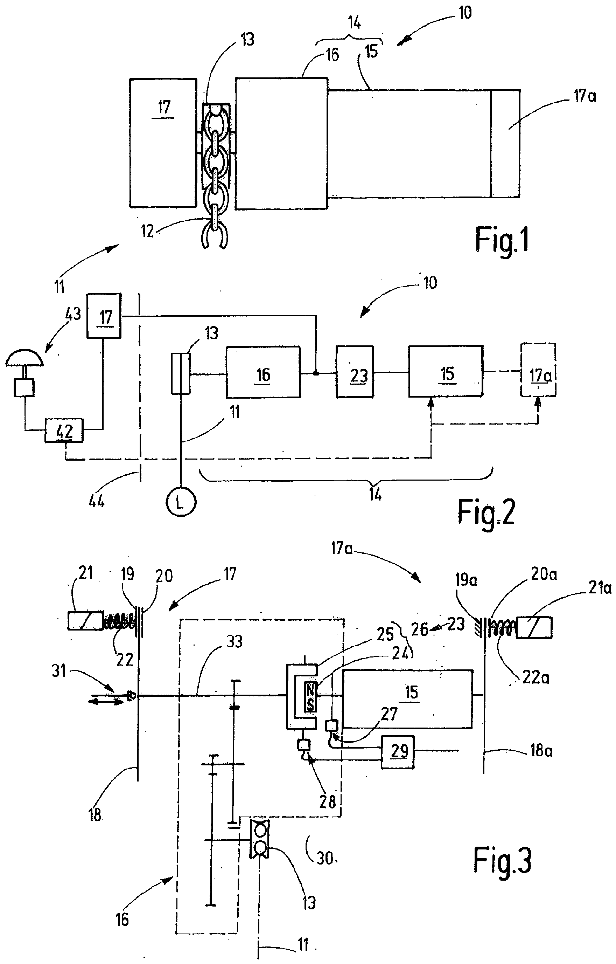

In Figur 1 ist ein Hebezeug 10 veranschaulicht, das Teil eines Krans, einer Krananlage oder dergleichen sein kann. Es dient dazu, Lasten L (Figur 2) mittels eines Zugmittels 11, beispielsweise in Gestalt einer Rundgliederkette 12, einer anderweitigen Kette, eines Seils oder dergleichen anzuheben oder auf anderem Weg zu bewegen. Die Kette 12 läuft dazu über ein Taschenrad 13, das an die Abtriebsseite eines Antriebstrangs 14 angeschlossen ist. Dieser umfasst einen Motor 15, vorzugsweise einen Elektromotor, sowie vorzugsweise ein Getriebe 16. Der Motor 15 kann ein Asynchronmotor, Synchronmotor oder ein sonstiger Elektromotor, ein Hydraulikmotor, ein Pneumatikmotor oder eine sonstige Antriebsquelle sein. Im einfachsten Fall kann es sich um einen netzbetriebenen ein- und ausschaltbaren Motor mit einer einzigen festen Drehzahl (zum Beispiel 1500 U/min oder 3000 U/min) handeln. Alternativ kann der Motor 15 durch Polumschaltung als netzbetriebener Motor mehrere Drehzahlen einnehmen. Bei einer besonders komfortablen Ausführungsform wird der Motor 15 mittels eines Inverters drehzahlvariabel betrieben.

Das Getriebe 16 ist ein Untersetzungsgetriebe, das eine hohe Motordrehzahl in eine niedrige Drehzahl des Taschenrads 13 oder sonstigen Antriebsrad für das Zugmittel 11 umsetzt, um Lasten zu bewegen. Vorzugsweise ist das Getriebe 16 ein Zahnradgetriebe ohne Selbstsperrung. Dies ist jedoch nicht zwingend.

An den Antriebsstrang 14 ist eine getriebeseitige Bremse 17 angeschlossen. Die Bremse 17 kann mit dem Taschenrad 13, einem anderweitigen Wickelrad oder einer anderen Getriebewelle verbunden sein. Vorzugsweise handelt es sich dabei, wie aus Figur 3 hervorgeht, um eine Scheibenbremse mit einer Bremsscheibe 18, der Bremsklötze 19, 20 zugeordnet sind. Diese sind vorzugsweise durch Kraft einer Schließfeder 22 auf die Bremsscheibe 18 hin gespannt. Sie können durch einen oder mehrere Elektromagnete 21 gelüftet werden, um die Bremsscheibe 18 freizugeben. Damit ist die Bremsscheibe 18 in stromlosem Zustand blockiert. Das dabei maximale auftretende Bremsmoment Mₘₐₓ ist zumindest größer als das von der Last L hervorzurufende Moment.

Das Getriebe 16 ist, wie Figur 3 schematisch erkennen lässt, ein Untersetzungsgetriebe. Der Antriebsstrang 14 enthält eine Schlupfkupplungsanordnung 23. Diese kann, wie die Figuren 2 und 3 exemplarisch zeigen, beispielsweise zwischen dem Motor 15 und dem Getriebe 16 angeordnet sein. Die Schlupfkupplungsanordnung 23 ist vorzugsweise eine Hysteresekupplung 26 ohne mechanische Verbindung zwischen ihrer motorseitigen, mit der Motorabtriebswelle verbundenen Kupplungshälfte 24 und ihrer getriebeseitigen, mit der Getriebeeingangswelle verbundenen Kupplungshälfte 25. Die beiden Kupplungshälften 24, 25 bilden die Hysteresekupplung 26 ohne Bypasskupplung. Die Hysteresekupplung 26 überträgt Drehmomente sowohl in Vorwärtsdrehrichtung als auch in Rückwärtsdrehrichtung des Motors 15. Die Hysteresekupplung 23 weist vorzugsweise einen zylindrischen Luftspalt auf, der zwischen den Kupplungshälften 24, 25 eingeschlossen ist. Das von der Hysteresekupplung 26 übertragene Drehmoment wird in erster Linie durch Hysterese-Effekte in einer der Kupplungshälften 24, 25 erzeugt. Weitere Drehmomentbeiträge können Wirbelstromeffekte und gegebenenfalls fluidmechanische Effekte liefern. Letzteres insbesondere, wenn die Hysteresekupplung 26 im Ölbad läuft.

Optional können die Kupplungshälften 24, 25 mit einem Drehzahlsensor, im einfachsten Fall einem Fliehkraftschalter verbunden sein. Alternativ können auch beide Kupplungshälften 24, 25 mit Drehzahlsensoren 27, 28 verbunden sein, die jeweils ein der Drehzahl der Kupplungshälfte 24 bzw. 25 entsprechendes Signal erzeugen. Die Signale können Schaltsignale, Analogsignale oder Digitalsignale sein, welche die Drehzahl und/oder die Phasenbeziehungen (Winkelbeziehung) der Kupplungshälften 24, 25 zueinander kennzeichnen. Die Signale können einer Einheit 29 zur Drehzahlbestimmung, Schlupferfassung und/oder Schlupfbestimmung zugeleitet sein. Der so erfasste Schlupf und/oder die Drehzahl (en) kann (können) als Steuerkriterium für den Betrieb des Motors 15 und/oder der Bremse 17 genutzt werden. Aus dem Schlupf kann der Betrag der Last ermittelt werden.

Die Hysteresekupplung 26 und das Getriebe 16 können, wie Figur 3 schematisch veranschaulicht, in einem gemeinsamen Getriebegehäuse 30 angeordnet sein. Dieses kann mit einer Ölfüllung versehen sein, die zur Schmierung von Lagern und Zahnrädern wie auch zur Kühlung der Hysteresekupplung 26 dient.

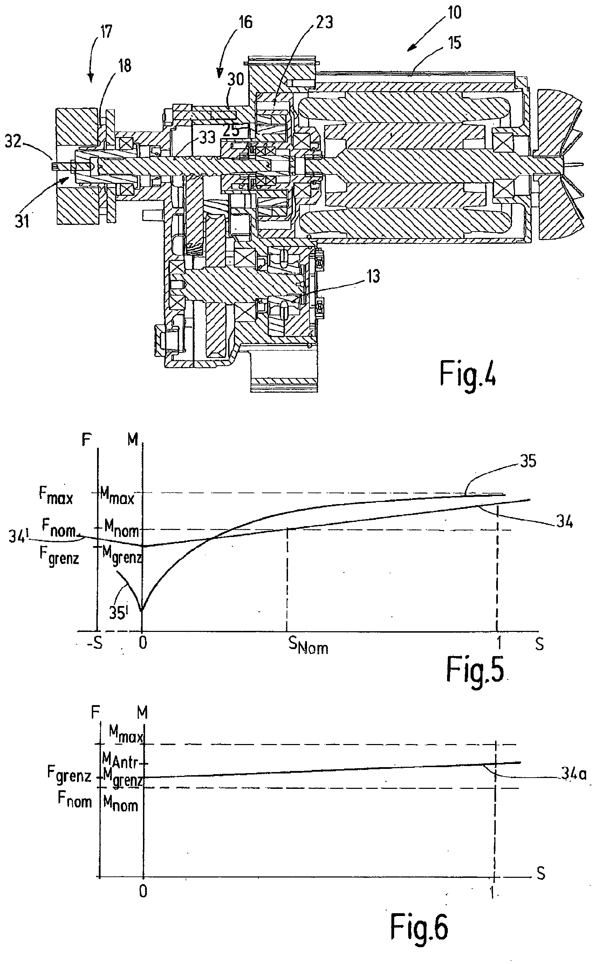

Figur 4 veranschaulicht den Aufbau des Hebezeugs 10 mit der Bremse 17 auf der Getriebeseite auf weniger abstrakte Weise unter Zugrundelegung einiger ausgewählter der bereits eingeführten Bezugszeichen. Wie ersichtlich weist das Hebezeug 10 eine Verstelleinrichtung 31 zur Verstellung der Hysteresekupplung 23 auf. Die Versteilleinrichtung 31 umfasst eine Einstellschraube 32, an der sich eine mit der getriebeseitigen Kupplungshälfte 25 verbundene Welle 33 abstützt. Durch Verstellung der Axialposition der Welle 33 wird die Axialrelativposition der Kupplungshälften 24, 25 zueinander und somit die Größe des Luftspalts verstellt.

Zusätzlich oder alternativ zu der Bremse 17 kann motorseitig eine Bremse 17a vorgesehen sein. Vorzugsweise ist diese als Scheibenbremse mit einer Bremsscheibe 18a ausgebildet, der Bremsklötze 19a, 20a, ein Elektromagnet 21a und eine Schließfeder 22a zugeordnet sind. Der Elektromagnet 21a dient zum Lösen (Lüften) der Bremse 17a. Im stromlosen Zustand ist die Bremse 17a eingefallen, d.h. sie erzeugt ihr maximales Bremsmoment Mₘₐₓ.

Bei der nachfolgenden Funktionsbeschreibung wird von einem Ausführungsbeispiel ausgegangen, bei dem die Bremse 17a nicht vorhanden ist und bei der die Schlupfkupplungsanordnung 23 die Kennlinie 34 nach Figur 5 aufweist:

Mit dem Hebezeug 10 lassen sich Lasten bewegen, die an das Zugmittel 11 angeschlossen sind. Dies kann an dem freien Ende des Zugmittels 11 oder über eine in einer Hakenflasche angeordneten losen Rolle geschehen, wenn das freie Ende des Zugmittels 11 an einem festen Aufhängepunkt, zum Beispiel an dem Getriebegehäuse 30 befestigt ist. Dreht der Motor 15, überträgt er über die Hysteresekupplung 23 und das Getriebe 16 das Antriebsmoment auf das Taschenrad 13 oder ein sonstiges Wickelrad, um die Last anzuheben oder anderweitig zu bewegen.

Ist das Gewicht der Last geringer als eine Grenzkraft F_{grenz}, kann dies ohne wesentlichen Schlupf der Hysteresekupplung 26 erfolgen. Ist die Last jedoch größer als die Grenzkraft F_{grenz} jedoch kleiner als die Nennlast Fₙₒₘ tritt an der Hysteresekupplung 26 Schlupf auf. Die Grenzkraft F_{grenz} entspricht an der Hysteresekupplung 23 einem Grenzdrehmoment M_{grenz}. Bei Erreichen dieses Drehmoments M_{grenz} ist der Schlupf S gerade noch Null.

Bei Überschreiten des Grenzdrehmoments M_{grenz} steigt der Schlupf an. Vorzugsweise weist die Hysteresekupplung 26 dabei eine lineare Kennlinie 34 auf, d.h. das übertragene Drehmoment M nimmt mit zunehmendem Schlupf S zu. Bei Erreichen der Nennlast Fₙₒₘ liegt an der Hysteresekupplung 23 das Nenndrehmoment Mₙₒₘ an, wobei sich der Schlupf Sₙₒₘ ergibt. Der Nennschlupf Sₙₒₘ liegt zwischen 0 und 1. Er kann zum Beispiel größer als 5% oder 10% sein. Vorzugsweise wird er so gewählt, dass sich die Nennlast noch zügig, jedoch mit etwas verminderter Geschwindigkeit anheben lässt, um dem Bediener zu signalisieren, dass die Nennlast erreicht ist. Falls höhere Geschwindigkeiten bei Nennlast erreicht werden sollen, kann die Getriebeübersetzung auch so gewählt werden, dass bei entstehendem Schlupf die Nenngeschwindigkeit erreicht wird. Der Vorteil einer solchen Übersetzungswahl liegt in der Tatsache, dass Teillasten schneller bewegt werden können. Die Arbeitseffizienz steigt dadurch an.

Es sei angemerkt, dass die Drehmoment/Schlupf-Kennlinie 34 in dem Diagramm nach Figur 5 bezüglich der vertikalen Drehmomentachse symmetrisch ist. Dies zeigt der Kurvenast 34' für negativen Schlupf S.

Weiter wird darauf hingewiesen, dass die Drehmoment/Schlupf-Kennlinie nicht zwingend linear sein muss. Sie kann auch wie in Figur 5 als Drehmoment/Schlupf-Kennlinie 35, 35' angedeutet ist von der Geradenform abweichen, so dass bei Grenzlasten, die geringer sind als die Hälfte der Nennlast Fₙₒₘ, bereits ein von Null verschiedener Schlupf auftritt. Vorzugsweise sind solche Kennlinien doch degressiv, um bei einem Schlupf gleich 1, d.h. bei einer Blockade des Zugmittels 11, eine maximalen Kraft Fₘₐₓ zu erzeugen, die auf einen sicheren Wert begrenzt ist. Dieser kann beispielsweise das 1,5-fache vorzugsweise das 1,3-fache, besser lediglich das 1,2- oder 1,1-fache der Nennlast Fₙₒₘ betragen.

Unabhängig davon, ob die Drehmoment/Schlupf-Kennlinie 34 linear ist oder ob eine nichtlineare Drehmoment/ Schlupf-Kennlinie vorhanden ist, kann durch Erfassung der Drehzahlen der Kupplungshälften 24, 25 mittels der Drehzahlsensoren 27, 28 der Schlupf S bestimmt und auf den Betriebszustand des Hebezeugs 10 geschlossen oder Einfluss genommen werden. Beispielsweise ist es möglich, die Drehzahl des Motors 15 abzusenken, wenn der Nennschlupf Sₙₒₘ überschritten wird. Dadurch kann ein Anheben von Lasten unterbunden werden, die größer sind als die Nennlast Fₙₒₘ, jedoch ohne den Motor 15 dabei ganz abzuschalten.

Weiter lässt sich durch Festlegen des Grenzdrehmoment M_{grenz} kleiner als das Drehmoment Mₙₒₘ ein sanfter Betrieb des Hebezeugs 10 auch dann erreichen, wenn der Motor 15 ohne Inverter direkt am Netz mit fester Drehzahl betrieben wird.

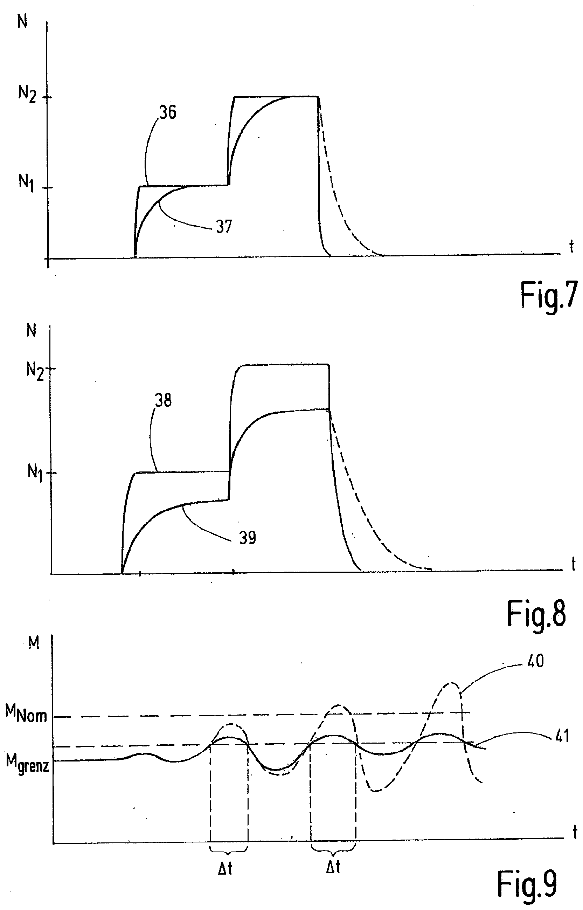

Figur 7 veranschaulicht dazu das Einschalten eines in zwei Drehzahlen N₁, N₂ betreibbaren Motors 15. Die Kurve 36 zeigt den Verlauf der Motordrehzahl und somit der Drehzahl der Kupplungshälfte 24. Die Kurve 37 zeigt den Verlauf der Drehzahl der Kupplungshälfte 25. Während der Beschleunigung der Last L nimmt der Schlupf S kurzzeitig zu, so dass die Drehzahl der getriebeseitigen Kupplungshälfte 25, der Drehzahl des Motors 15 verzögert folgt. Auf diese Weise wird eine stoßartige Belastung des Zugmittels 11 des Getriebes oder Tragstrukturen des Hebezeugs vermieden oder vermindert. Entsprechend ist der Effekt auch bei einem Motor 15, der lediglich mit einer einzigen festen Drehzahl zu betreiben ist. Wie ersichtlich, erreicht die Hysteresekupplung 26 jeweils nach einer gewissen Zeit den Schlupf 0, d.h. die Last ist geringer als die Grenzlast F_{grenz} .

Figur 8 zeigt den Betrieb bei einem Gewicht der Last L, die größer als die Grenzlast F_{grenz}. Während die Motordrehzahl sich geradezu sprungartig ändert (Kurve 38), folgt die Drehzahl der getriebeseitigen Kupplungshälfte 25 deutlich verzögert, ohne die Motordrehzahl je zu erreichen. Der Betrieb des Hebezeugs 10 ist somit bei Annäherung an die Nennlast Fₙₒₘ besonders sanft.

Bei Verwendung der motorseitigen Bremse 17a in Kombination mit der getriebeseitigen Bremse 17 kann ebenfalls eine stoßartige Belastung des Zugmittels 11 währen der Stopp-Phase vermieden oder vermindert werden. Bei Verwendung von zwei Bremsen, müssen die Bremsen so angesteuert werden, dass zuerst die motorseitige Bremse 17a bremst (einfällt) und anschließend -verzögert- die getriebeseitige Bremse 17. Nach dem Schließen (Einfallen) der motorseitigen Bremse 17a fällt die Motordrehzahl 36 und 38 rapide ab. Die Last wird durch die Hysteresekupplung 26 sanft abgebremst, die nun wie eine Hysteresebremse wirkt. Nach dem verzögerten Einfall der getriebeseitigen Bremse 17 wird die Last von dieser sicher gehalten. Das beschriebene Hebezeug 10 mit zwei Bremsen 17, 17a unterstützt auf einfache Art die Möglichkeit der kontrollierten Lastabsenkung. Während die motorseitige Bremse 17a geschlossen bleibt, kann die getriebeseitige Bremse 17 manuell gelüftet werden und die Hysteresekupplung 26 kann probeweise so lange in Richtung geringeres Drehmoment verstellt werden, bis die Last kontrolliert mit der Hysteresekupplung 26 als Hysteresebremse herabgelassen werden kann.

Figur 9 veranschaulicht einen weiteren nützlichen Effekt an dem Hebezeug 10. Dazu ist ein Drehmoment/ZeitDiagramm angegeben, das den Verlauf des Drehmoments M an der Hysteresekupplung 26 im Fall einer Schwingungsanfachung charakterisiert. Eine solche Schwingungsanfachung kann unter anderem durch den Polygoneffekt des Taschenrads 13 erfolgen. Wenn das drehende, wirkungsmäßig polygonale Taschenrad 13 die Kette 12 mit einer Frequenz anregt, die der Resonanzfrequenz der gespannten Kette 12 entspricht, kann es zu heftigen Oszillationen derselben kommen. Figur 9 veranschaulicht in einer gestrichelten Linie 40 einen sich so ergebenden Drehmomentverlauf, bei dem das Nenndrehmoment Fₙₒₘ und somit auch die entsprechende Nennlast Fₙₒₘ überschritten würde. Jedoch erreicht das durch eine durchgezogene Linie 41 dargestellte Drehmoment an der Hysteresekupplung 23 wiederholt in Zeitabschnitten Δt eine Zone zwischen dem Grenzdrehmoment M_{grenz} und dem Nenndrehmoment M_{nom.} In dieser Zone ist der Schlupf S verschieden von Null, so dass dem Schwingungsvorgang Energie entzogen und in Wärme umgewandelt wird. Die Schwingung wird dadurch wirksam gedämpft, so dass sie ganz zum Erliegen kommt oder wenigstens das Nenndrehmoment Mₙₒₘ und damit die Nennlast Fₙₒₘ nicht überschritten wird.

Es wird auf eine weitere Ausführungsform hingewiesen. Wenn die Drehmoment/Schlupf-Kennlinie gemäß Kennlinie 34a nach Figur 6 so festgelegt ist, dass das Grenzdrehmoment M_{grenz} oberhalb des Nenndrehmoments Mₙₒₘ liegt, schlüpft die Hysteresekupplung 26 in Normalbetrieb nicht. Es kann in diesem Fall auf die getriebeseitige Bremse 17 verzichtet werden und allein die motorseitige Bremse 17a zur Anwendung kommen. Auch in diesem Fall kann, wenn auch in vermindertem Maße, die Hysteresekupplung 26 zur Stoßabsorption dienen, wenn der Motor 15 Drehzahlsprünge nach Figur 7 oder 8 vollführt oder eine Schwingungsanregung vorliegt, wie in Figur 9 dargestellt. Neben dem Sanftanlauf kann auch die oben beschriebene manuelle Lastabsenkung durchgeführt werden, bei der der Motor 15 z.B. durch die motorseitige Bremse 17a blockiert und die Hysteresekupplung 26 als Hysteresebremse genutzt wird.

Die Hysteresekupplung 26 mit einer Festlegung des Grenzdrehmoments M_{grenz} oberhalb des Nenndrehmoments Mₙₒₘ kann jedoch auch bei Ausführungsbeispielen Anwendung finden, bei denen lediglich die Bremse 17 oder beide Bremsen 17, 17a vorhanden sind. Ein besonderer sich daraus ergebender Vorteil ist aus der Veranschaulichung nach Figur 2 zu ersehen. Dort weist das Hebezeug 10 (links) einen sicherheitsgerichteten Bereich auf, der aus der Bremse 17, ihrer Steuereinheit 42 und gegebenenfalls Schalteinrichtungen wie beispielsweise einem Notaustaster 43 besteht. Die Steuereinrichtung 42 kann über eine in Figur 2 gestrichelt veranschaulichte Wirkverbindung die optional vorhandene zweite Bremse 17a und/oder die nicht weiter nach Sicherheitsgesichtspunkten konzipierte Steuerung des Motors 15 beeinflussen, beispielsweise um die Bremse 17a zu schließen und den Motor 15 still zu setzen. Das Hebezeug 10 weist nach Figur einen links der vertikal gestrichelten Linie 44 dargestellten sicherheitsgerichteten Bereich und einen rechts davon veranschaulichten nicht sicherheitsgerichteten Bereich auf. Die Bremse 17 ist bei dieser Ausführungsform so dimensioniert, dass sie sowohl das von der Last L ausgehende Drehmoment (maximal Mₙₒₘ) sowie zusätzlich das von dem Antriebsstrang 14 aufgebrachte Drehmoment M_{Antr} aufnehmen kann. Letzteres ist das maximal von dem Motor 15 erzeugbare Drehmoment oder das maximal von der Schlupfkupplungsanordnung 23 übertragbare Drehmoment, je nach dem welches geringer ist. Kann die Bremse 17 mindestens die genannte Drehmomentsumme aus Lastdrehmoment Mₙₒₘ und Antriebsdrehmoment M_{Antr} aufnehmen, kann sie die Last in jeden Fall stillsetzen und zwar auch dann, wenn der Motor 15 unkontrolliert vorwärts oder rückwärts dreht.

Die Steuereinrichtung 42 bildet eine manuell gesteuerte Notstoppeinrichtung. Die Steuereinrichtung 42 kann aber auch von Steuersignalen, z.B. von Drehzahlsignalen, Schlupfsignalen, Lastsignalen oder dergleichen gesteuert sein, die z.B. von einem oder mehreren Drehzahlsensoren 27, 28 abgegeben werden.

Das erfindungsgemäße Hebezeug 10 weist einen Antriebsstrang 14 auf, der eine Schlupfkupplungsanordnung 23 mit Hysteresekupplung 26 enthält. Diese überträgt reibungsfrei sowohl in Vorwärts- wie in Rückwärtsrichtung Drehmoment zwischen dem Motor 15 und dem Getriebe 16. Die Hysteresekupplung 23 bildet einen unverzweigten Drehmomentübertragungsweg zwischen Motor 15 und Getriebe 16.

Die Hysteresekupplung 26 des verbesserten Hebezeugs 10 wirkt als Schwingungsdämpfer, gestattet die kontrollierte Last-Notabsenkung und dient als sichere Drehmomentbegrenzung in Notausfalle beim Stillsetzen einer Last. Außerdem kann sie zur Lastindikation durch Verminderung der Lasthubgeschwindigkeit vor dem Erreichen der Nennlast oder bei Überlast dienen.

### Bezugszeichenliste:

- 10: Hebezeug
- L: Last
- 11: Zugmittel
- 12: Kette
- 13: Taschenrad
- 14: Antriebsstrang
- 15: Motor
- 16: Getriebe
- 17, 17a: Bremse
- 18, 18a: Bremsscheibe
- 19, 20, 19a, 20a: Bremsklötze
- Mₘₐₓ: Maximales Drehmoment
- Mₙₒₘ: Nenndrehmoment
- M_{Antr}: Maximales Antriebsmoment
- M_{grenz}: Kupplungsmoment, bei dem Schlupf beginnt
- F_{grenz}: Last, bei der Kupplungsschlupf beginnt
- Fₙₒₘ: Nennlast
- 21, 21a: Elektromagnet
- 22, 22a: Feder
- 23: Schlupfkupplungsanordnung
- 24: motorseitige Kupplungshälfte
- 25: getriebeseitige Kupplungshälfte
- 26: Hysteresekupplung
- 27, 28: Drehzahlsensoren
- 29: Steuereinheit
- 30: Getriebegehäuse
- 31: Verstelleinrichtung
- 32: Einstellschraube
- 33: Welle
- 34, 34', 34a: Drehmoment/Schlupf-Kennlinie - linear
- 35, 35': Drehmoment/Schlupf-Kennlinie - nichtlinear
- 36: Motordrehzahl
- 37: Drehzahl Getriebeeingangswelle
- 38: Motordrehzahl
- 39: Drehzahl Getriebeeingangswelle
- 40, 41: Linie
- 42: Steuereinrichtung
- 43: Not-Aus-Taster
- 44: Linie

## Patentansprüche

1. Hebezeug (10) zum Bewegen einer Last (L)
mit einem Antriebsstrang (14), der einen Motor (15) und ein Getriebe (16) aufweist und an den ausgangsseitig ein Zugmittel (11) zur Aufnahme der Last (L) angeschlossen ist,
mit einer Schlupfkupplungsanordnung (23), die in dem Antriebstrang (14) angeordnet ist,
mit einer Bremse (17, 17a), die mit dem Antriebsstrang (14) verbunden und dafür ausgelegt ist, in geschlossenem Zustand die Last (L) zu halten,
**dadurch gekennzeichnet,**
**dass** die Schlupfkupplungsanordnung (23) einen unverzweigten Drehmomentübertragungsweg aufweist, der durch eine Hysteresekupplung (26) gebildet ist, so dass kein Bypassweg existiert, auf dem an der Hysteresekupplung vorbei Drehmoment übertragen werden könnte.

2. Hebezeug nach Anspruch 1, **dadurch gekennzeichnet, dass** die Schlupfkupplungsanordnung (23) bezüglich der Vorwärtsdrehrichtung und der Rückwärtsdrehrichtung eine symmetrische Drehmoment-Schlupf-Kennlinie (34) aufweist.

3. Hebezeug nach einem der vorstehenden Ansprüche, **dadurch gekennzeichnet, dass** die Hysteresekupplung (26) zwischen dem Motor (15) und dem Getriebe (16) angeordnet ist.

4. Hebezeug nach einem der vorstehenden Ansprüche, **dadurch gekennzeichnet, dass** die Bremse (17, 17a) wenigstens eine in Schließrichtung wirksame Feder (22) und eine Löseeinrichtung (21) aufweist, die bei Aktivierung gegen die Schließfeder (22) wirkt.

5. Hebezeug nach einem der vorstehenden Ansprüche, **dadurch gekennzeichnet, dass** die Bremse (17, 17a) elektrisch gelüftet ist.

6. Hebezeug nach einem der vorstehenden Ansprüche, **dadurch gekennzeichnet, dass** die Bremse (17, 17a) beim Heben von Lasten (L) gelüftet ist.

7. Hebezeug nach einem der vorstehenden Ansprüche, **dadurch gekennzeichnet, dass** die Bremse (17, 17a) beim Senken von Lasten (L) gelüftet ist.

8. Hebezeug nach einem der vorstehenden Ansprüche, **dadurch gekennzeichnet, dass** die Bremse (17) auf der Getriebeseite des Antriebsstrangs (14) angeordnet ist.

9. Hebezeug nach einem der vorstehenden Ansprüche, **dadurch gekennzeichnet, dass** die Bremse (17) ein maximales Bremsmoment (Mₘₐₓ) aufweist, dass einer Last (Fₘₐₓ) entspricht, die größer ist als die Nennlast (Fₙₒₘ).

10. Hebezeug nach einem der vorstehenden Ansprüche, **dadurch gekennzeichnet, dass** die Bremse ein maximales Bremsmoment (Mₘₐₓ) aufweist, dass der Summe aus einem Nennlastmoment (Mₙₒₘ) und einem Antriebsmoment (M_{Antr}) entsprich, wobei das Nennlastmoment (Mₙₒₘ) einer Nennlast (Fₙₒₘ) entspricht und das Antriebsmoment (M_{Antr}) das maximale Motormoment oder das von der Schlupfkupplungsanordnung (23) maximal übertragbare Moment ist, je nach dem, welches kleiner ist.

11. Hebezeug Anspruch 10, **dadurch gekennzeichnet, dass** die Bremse (17) mit einer Not-Aus-Steuerung und/oder einer anderen Notstoppeinrichtung (42) verbunden ist.

12. Hebezeug einem der vorstehenden Ansprüche, **dadurch gekennzeichnet, dass** die Schlupfkupplungsanordnung (23) ein Grenzdrehmoment (M_{grenz}) aufweist, bei dem sie zu schlüpfen beginnt, das einer Grenzlast (F_{grenz}) entspricht, die geringer ist als die Nennlast (Fₙₒₘ).

13. Hebezeug nach einem der vorstehenden Ansprüche, **dadurch gekennzeichnet, dass** die Bremse (17a) auf der Motorseite des Antriebsstrangs (14) angeordnet ist.

14. Hebezeug einem der vorstehenden Ansprüche, **dadurch gekennzeichnet, dass** die Schlupfkupplungsanordnung (23) ein Grenzdrehmoment (M_{grenz}) aufweist, bei dem sie zu schlüpfen beginnt, das einer Grenzlast (F_{grenz}) entspricht, die größer ist als die Nennlast (Fₙₒₘ).

15. Hebezeug nach einem der vorstehenden Ansprüche, **dadurch gekennzeichnet, dass** das Getriebe (16) selbsthemmungsfrei ausgebildet ist.

## Claims

1. Lifting gear (10) for moving a load (L),
with a drive train (14) which comprises a motor (15) and a gear mechanism (16) and to which, on the output side, a traction mechanism (11) is connected for receiving the load (L),
with a slip clutch arrangement (23) arranged in the drive train (14),
with a brake (17, 17a) which is connected to the drive train (14) and is designed to hold the load (L) when applied,
**characterised in that** the slip clutch arrangement (23) has an unbranched torque transmission path which is formed by a hysteresis clutch (26), so that no bypass path exists via which torque could be transmitted past the hysteresis clutch.

2. Lifting gear according to claim 1, **characterised in that** the slip clutch arrangement (23) has a symmetrical torque-slip curve (34) relative to the forward rotation direction and to the reverse rotation direction.

3. Lifting gear according to one of the preceding claims, **characterised in that** the hysteresis clutch (26) is arranged between the motor (15) and the gear mechanism (16).

4. Lifting gear according to any of the preceding claims, **characterised in that** the brake (17, 17a) has at least one spring (22) active in the closing direction, and a release device (21) which acts against the closing spring (22) when activated.

5. Lifting gear according to any of the preceding claims, **characterised in that** the brake (17, 17a) is electrically vented.

6. Lifting gear according to any of the preceding claims, **characterised in that** the brake (17, 17a) is vented when loads (L) are lifted.

7. Lifting gear according to any of the preceding claims, **characterised in that** the brake (17, 17a) is vented when loads (L) are lowered.

8. Lifting gear according to any of the preceding claims, **characterised in that** the brake (17) is arranged on the gear-side of the drive train (14).

9. Lifting gear according to any of the preceding claims, **characterised in that** the brake (17) has a maximal braking moment (Mₘₐₓ) corresponding to a load (Fₘₐₓ) which is greater than the nominal load (Fₙₒₘ).

10. Lifting gear according to any of the preceding claims, **characterised in that** the brake has a maximal braking moment (Mₘₐₓ) which corresponds to the sum of a nominal load moment (Mₙₒₘ) and a drive moment (M_{Antr}), wherein the nominal load moment (Mₙₒₘ) corresponds to a nominal load (Fₙₒₘ) and the drive moment (M_{Antr}) is the maximal motor moment or the maximal moment which can be transmitted by the slip clutch arrangement (23), whichever is the smaller.

11. Lifting gear according to claim 10, **characterised in that** the brake (17) is connected to an emergency stop control unit and/or another emergency stop device (42).

12. Lifting gear according to any of the preceding claims, **characterised in that** the slip clutch arrangement (23) has a limit torque (M_{grenz}) at which it begins to slip, which corresponds to a limit load (F_{grenz}) which is smaller than the nominal load (Fₙₒₘ).

13. Lifting gear according to any of the preceding claims, **characterised in that** the brake (17a) is arranged on the motor-side of the drive train (14).

14. Lifting gear according to any of the preceding claims, **characterised in that** the slip clutch arrangement (23) has a limit torque (M_{grenz}) at which it begins to slip, which corresponds to a limit load (F_{grenz}) which is greater than the nominal load (Fₙₒₘ).

15. Lifting gear according to any of the preceding claims, **characterised in that** the gear mechanism (16) is configured without self-locking device.

## Revendications

1. Engin de levage (10) pour déplacer une charge (L), comprenant une chaîne de transmission (14) qui comporte un moteur (15) et une transmission (16) et à laquelle est relié, côté sortie, un moyen de traction (11) pour recevoir la charge (L), comprenant un agencement d'accouplement à glissement (23) qui est disposé dans la chaîne de transmission (14), comprenant un frein (17, 17a) qui est relié à la chaîne de transmission (14) et est conçu pour retenir la charge (L) à l'état fermé, **caractérisé en ce que** l'agencement d'accouplement à glissement (23) comporte un trajet de transmission de couple non ramifié qui est formé par un accouplement à hystérésis (26), de sorte qu'il n'existe aucun trajet de dérivation par lequel le couple pourrait être transmis sans passer par l'accouplement à hystérésis.

2. Engin de levage selon la revendication 1, **caractérisé en ce que** l'agencement d'accouplement à glissement (23) présente une caractéristique couple-glissement symétrique (34) par rapport au sens de rotation avant et au sens de rotation arrière.

3. Engin de levage selon une des revendications précédentes, **caractérisé en ce que** l'accouplement à hystérésis (26) est disposé entre le moteur (15) et la transmission (16).

4. Engin de levage selon une des revendications précédentes, **caractérisé en ce que** le frein (17, 17a) comporte au moins un ressort (22) agissant dans le sens de fermeture et un équipement de libération (21) qui, lorsqu'il est activé, agit à l'encontre du ressort de fermeture (22).

5. Engin de levage selon une des revendications précédentes, **caractérisé en ce que** le frein (17, 17a) est desserré électriquement.

6. Engin de levage selon une des revendications précédentes, **caractérisé en ce que** le frein (17, 17a) est desserré lors du levage de charges (L).

7. Engin de levage selon une des revendications précédentes, **caractérisé en ce que** le frein (17, 17a) est desserré lors de la descente de charges (L).

8. Engin de levage selon une des revendications précédentes, **caractérisé en ce que** le frein (17) est disposé sur le côté transmission de la chaîne de transmission (14).

9. Engin de levage selon une des revendications précédentes, **caractérisé en ce que** le frein (17) présente un couple de freinage maximal (Mₘₐₓ) qui correspond à une charge (Fₘₐₓ) qui est supérieure à la charge nominale (Fₙₒₘ).

10. Engin de levage selon une des revendications précédentes, **caractérisé en ce que** le frein présente un couple de freinage maximal (Mₘₐₓ) qui correspond à la somme d'un couple de charge nominal (Mₙₒₘ) et d'un couple d'entraînement (M_{Antr}), le couple de charge nominal (Mₙₒₘ) correspondant à une charge nominale (Fₙₒₘ) et le couple d'entraînement (M_{Antr}) étant le couple moteur maximal ou le couple maximal transmissible par l'agencement d'accouplement à glissement (23), selon celui qui est le plus bas.

11. Engin de levage selon la revendication 10, **caractérisé en ce que** le frein (17) est relié à une commande de coupure d'urgence et/ou à un autre équipement d'arrêt d'urgence (42).

12. Engin de levage selon une des revendications précédentes, **caractérisé en ce que** l'agencement d'accouplement à glissement (23) présente un couple limite (M_{grenz}) auquel il commence à glisser et qui correspond à une charge limite (F_{grenz}) qui est inférieure à la charge nominale (Fₙₒₘ).

13. Engin de levage selon une des revendications précédentes, **caractérisé en ce que** le frein (17a) est disposé sur le côté moteur de la chaîne de transmission (14).

14. Engin de levage selon une des revendications précédentes, **caractérisé en ce que** l'agencement d'accouplement à glissement (23) présente un couple limite (M_{grenz}) auquel il commence à glisser et qui correspond à une charge limite (F_{grenz}) qui est supérieure à la charge nominale (Fₙₒₘ).

15. Engin de levage selon une des revendications précédentes, **caractérisé en ce que** la transmission (16) est conçue sans blocage automatique.
